# EUROPÄISCHE PATENTSCHRIFT

(11) **EP 1 320 513 B1**
(45) Veröffentlichungstag und Bekanntmachung des Hinweises auf die Patenterteilung: **02.08.2006**
(21) Anmeldenummer: 02797969.9
(22) Anmeldetag: 09.09.2002
(51) Int. Cl.: C02F 1/32, C02F 1/78

(54) **OZON/UV-KOMBINATION ZUM ABBAU VON ENDOKRINEN SUBSTANZEN**
OZONE/UV COMBINATION FOR THE DECOMPOSITION OF ENDOCRINE SUBSTANCES
UTILISATION COMBINEE D'OZONE ET D'ULTRAVIOLETS POUR DEGRADER DES SUBSTANCES ENDOCRINES

(30) Priorität: 10.09.2001 DE 10144510
(43) Veröffentlichungstag der Anmeldung: 25.06.2003
(73) Patentinhaber: WEDECO AG Water Technology, 40472 Düsseldorf (DE)
(72) Erfinder: RIED, Achim, 32549 Bad Oeynhausen (DE)
(74) Vertreter: LENZING GERBER
(86) Internationale Anmeldenummer: PCT/EP2002/010083
(87) Internationale Veröffentlichungsnummer: WO 2003/022749

(56) Entgegenhaltungen:
- DE-A- 3 921 436
- DE-A- 19 801 867
- US-A- 5 554 295
- PATENT ABSTRACTS OF JAPAN vol. 2000, no. 22, 9. März 2001 (2001-03-09) & JP 2001 129572 A (MITSUBISHI HEAVY IND LTD), 15. Mai 2001 (2001-05-15)
- RUDOLPH K U ET AL: "STAND DER TECHNIK BEI DER DESINFEKTION VON ABWASSER UND SCHWERPUNKTE DER FORSCHUNG" GWF WASSER ABWASSER, OLDENBOURG VERLAG. MUNCHEN, DE, Bd. 134, Nr. 1, 1993, Seiten 1-9, XP000331821 ISSN: 0016-3651
- EGBERTS G: "ABBAU VON OZON IN WAESSRIGER LOESUNG DURCH UV-STRAHLUNG" GWF WASSER ABWASSER, OLDENBOURG VERLAG. MUNCHEN, DE, Bd. 135, Nr. 8, 1. August 1994 (1994-08-01), Seiten 465-469, XP000457372 ISSN: 0016-3651
- KATSUKI KUSAKABE ET AL: "DECOMPOSITION OF HUMIC ACID AND REDUCTION OF TRIHALOMETHANE FORMATION POTENTIAL IN WATER BY OZONE WITH U.V. IRRADIATION" WATER RESEARCH, ELSEVIER SCIENCE PUBLISHERS, AMSTERDAM, NL, Bd. 24, Nr. 6, 1. Juni 1990 (1990-06-01), Seiten 781-785, XP000173146 ISSN: 0043-1354

## Beschreibung

Die vorliegende Erfindung betrifft ein Verfahren zur Behandlung von Wasser, insbesondere von Abwasser oder Trinkwasser.

Kommunale und industrielle Abwässer werden üblicherweise in biologischen Reinigungsanlagen behandelt, bevor sie in einen Vorfluter eingeleitet werden. Die biologische Reinigungsanlage kann aus mehreren Stufen bestehen, wobei die Hauptstufe meist eine sogenannte Belebtschlammstufe beinhaltet. Die Abtrennung des Klärschlamms erfolgt in einer Nachklärstufe. Zusätzlich kann vorgesehen sein, daß das Abwasser einer Sand/Kiesfiltration unterzogen wird. Die derart behandelten Abwässer erreichen im allgemeinen die geforderten Grenzwerte hinsichtlich der Konzentration der darin enthaltenen Reststoffe und Mikroorganismen.

Es gibt jedoch Fälle, in denen die geschilderte Abwasserbehandlung nicht ausreichend ist, wenn nämlich beispielsweise erhöhte Ansprüche bezüglich der Keimbelastung, der Belastung mit schwer abbaubaren organischen Stoffen, Geruch und Farbe gestellt werden. So ist eine weitergehende Reinigung beispielsweise dann erforderlich, wenn das behandelte Abwasser in Badegewässer eingeleitet werden soll oder für Bewässerungszwecke in der Landwirtschaft genutzt werden soll.

Allein zur Reduktion der im Abwasser enthaltenen pathogenen Mikroorganismen (Bakterien, Viren, Einzeller) ist es mittlerweile üblich, eine Desinfektion des Abwassers mit UV-Strahlung vorzusehen. Diese Desinfektion ist jedoch nicht geeignet, schwer abbaubare organische Stoffe, Geruchsstoffe und Farbstoffe zu beseitigen. Zudem wird bei einer Trübung des Abwassers die Desinfektionsleistung der UV-Bestrahlungsvorrichtungen vermindert, da ein Teil der Strahlung bereits im Wasser selbst absorbiert wird.

Weiter sind Desinfektionsverfahren mit Ozonzugabe bekannt, die auch durch Oxydation die erwähnten schwer abbaubaren Stoffe sowie die Geruchsstoffe und die Farbstoffe vermindern. Für die angestrebte Reduktion sowohl der schwer abbaubaren Stoffe als auch der Mikroorganismen ist jedoch eine relativ hohe Ozonkonzentration von beispielsweise 20 mg Ozon pro Liter erforderlich. Diese Ozonzugabe ist mit hohen Investitions- und Betriebskosten verbunden.

Eine dritte Möglichkeit für die wirksame Abwasserbehandlung ist die Membranfiltration, die bei den oben geschilderten Bedingungen wiederum an Investitions- und Betriebskosten ein Mehrfaches der Ozonbehandlung kostet.

Ähnliche Situationen sind auch bei anderen Wässern denkbar, beispielsweise bei Trinkwasser. Wenn im Trinkwasser neben einer behandlungsbedürftigen Konzentration von Mikroorganismen auch schwer abbaubare Stoffe wie beispielsweise chlorierte Kohlenwasserstoffe oder aromatische Kohlenwasserstoffe enthalten sind, ist eine preiswerte und effektive UV-Desinfektion zum Abbau dieser Stoffe nicht geeignet. In solchen Situationen würde anstelle der UV-Desinfektion eine Ozonzugabe installiert, die die erwähnten höheren Kosten verursacht.

Verschiedene Verfahren zur Behandlung von Abwässern mit Ozon und UV sind auch aus den folgenden Druckschriften bekannt:

Die EP 0696258 B1 zeigt eine Wasserreinigungseinheit, bei der ultraviolettes Licht zur Desinfektion benutzt wird. Die Lichtquelle ist dabei so ausgebildet, dass auch sehr kurzwellige Strahlung in das Wasser eintreten kann und dort in unmittelbarer Nachbarschaft der UV-Quelle Ozon gebildet wird. Die zu erwartenden Ozonkonzentrationen sind gering und bewegen sich im Bereich von mg/m³. Der Energieaufwand für die Ozonproduktion über UV-Strahlung ist bereits in Luft mit rund 40kWh/kg Ozon höher als bei der Ozonerzeugung mit elektrischer Entladung, die etwa 7kWh/kg Ozon erfordert. Die unmittelbare Ozonerzeugung in Wasser mittels UV hat einen noch geringeren Wirkungsgrad als in Luft. Die Vorrichtung ist deshalb energieaufwändig und für den Einsatz in kommunalen Kläranlagen oder Trinkwasserversorgungsanlagen nicht geeignet.

Eine ähnliche Vorrichtung ist aus der WO 97/36825 bekannt. Auch hier wird Ozon im Konzentrationsbereich von einigen mg/m³ über einen photochemischen Prozess mittels ultravioletter Strahlung erzeugt. Auch diese Anlage ist, was die OzonProduktion betrifft, nicht wirtschaftlich im Maßstab kommunaler Anlagen zu betreiben.

Aus der deutschen Offenlegungsschrift DE 2618338 ist eine Vorrichtung zur Oxidation organischer Inhaltsstoffe in wässrigen Medien bekannt. Bei dieser Anlage ist das Ziel des Verfahrens die vollständige Oxidation der organischen Stoffe. Dazu wird eine sehr hohe Ozonkonzentration eingesetzt, die bspw. im Bereich von 860g/m³ liegt. Die Behandlung der wässrigen Medien mittels Ozon erfolgt in mehreren hintereinander geschalteten Bädern, durch die das Ozon im Gegenstrom geleitet wird. In dem letzten Bad ist bei einem Ausführungsbeispiel eine zusätzliche UV-Bestrahlung vorgesehen, die den Oxidationseffekt verstärkt.

Die Wirkung des UV-Lichtes ist in dieser Konfiguration nicht optimal ausgenutzt, da die UV-Strahlung bei Anwesenheit von Gasbläschen infolge der Ozoneinleitung stärker absorbiert wird als in einem gasfreien Medium. Außerdem kann das Ozon in der angegebenen hohen Konzentration durch UV-Licht bereits auf molekularer Basis abgebaut werden, sodass es in den späteren Stufen in geringerer Konzentration vorliegt, als dies ohne UV-Bestrahlung der Fall wäre. Der Abbau von Ozon durch Bestrahlung mit UV-Licht in der wässrigen Phase kann bewusst genutzt werden, um Ozon anzuregen (Überführung in Radikale). Diese Radikale sollen dann einen schnelleren und weitergehenden Abbau bewirken. Im realen Abwasser wird der Effekt (verbesserter Abbau durch Radikalreaktionen) aber durch Nebenreaktionen überlagert. Dieses System ist deshalb ebenfalls hinsichtlich der optimalen Wirkung von Ozon und UV nachteilig. Es ist für den wirtschaftlichen, großtechnischen Betrieb nicht geeignet.

Aus der DE 19509066 A1 sind eine Vorrichtung und ein Verfahren zur Ozonbehandlung von Wasser bekannt. Bei dem Verfahren ist keine Ozonkonzentration im Wasser angegeben. Am Ausgang der Ozonbehandlungsstufe sind UV-Strahler vorgesehen, die einen eventuellen Restgehalt an Ozon in dem Wasser abbauen sollen. Eine Entgasung des behandelten Wassers findet in Strömungsrichtung hinter der UV-Bestrahlung statt. Auch hier kann die UV-Bestrahlung ihre volle Wirkung nicht entfalten, da das Wasser im Zeitpunkt der Bestrahlung noch Gasbläschen enthält.

Aus der DE 3884808 T2 ist ein Verfahren zur Oxidierung organischer Stoffe im Wasser bekannt, das mit Konzentrationen von einigen 100g/m³ Ozon, gleichzeitiger Zugabe von H₂O₂ und gleichzeitiger Bestrahlung mit UV-Stahlen arbeitet. Auch bei diesen Verfahren kann die UV-Strahlung die optimale Wirkung nicht erreichen, da das Wasser während der Ozon-Behandlung bestrahlt wird. Dies führt, wie oben erwähnt, zu einem vorzeitigen Ozonabbau infolge der Strahlungseinwirkung und andererseits zu einer Verringerung der UV-Transmission aufgrund des im Wasser blasenförmig enthaltenen Gases. Hier werden die verschiedenen chemisch-physikalischen Prozesse (Ozonreaktionen, Aktivierte Ozonreaktion mit H2O2/ Aktivierte Ozonreaktion mit UV) gleichzeitig eingesetzt, wobei die jeweilige Effizienz des Einzelprozesses nicht optimal genutzt wird bzw. sogar noch vermindert wird durch Neben- und Querreaktionen.

Schließlich ist aus der WO 94/11307 ein Verfahren bekannt, bei dem in einer Behandlungskammer unter Ozon- und UV-Einwirkung das Abwasser einer Deponie versprüht wird. Dieses Verfahren ist sehr aufwändig, da das Abwasser gepumpt und unter Druck versprüht werden muss. Die Wirksamkeit hinsichtlich der Effizienz der aufgewendeten Energie ist relativ gering, da zu dem Aufwand für das Pumpen und Versprühen des zu behandelnden Abwassers auch die nicht optimale Ausnutzung der UV-Strahlung kommt. Ein solches Verfahren ist aufgrund des hohen spezifischen Energieaufwandes nur für stark kontaminierte Abwässer wirtschaftlich geeignet.

Es ist deshalb Aufgabe der vorliegenden Erfindung, ein Verfahren zur Behandlung von Wässern anzugeben, die sowohl mit schwer abbaubaren Stoffen als auch mit pathogenen Mikroorganismen belastet sind, bei dem eine gute und zuverlässige Reinigungsleistung mit einem geringeren Investitions- und Betriebsaufwand möglich ist.

Diese Aufgabe wird von einem Verfahren mit den Merkmalen des Anspruchs 1 gelöst.

Bei dem erfindungsgemäßen Verfahren ist vorgesehen, dem zu behandelnden Wasser sowohl Ozon zuzuführen als auch eine UV-Bestrahlung vorzunehmen. Erfindungsgemäß liegt die zuzuführende Ozonkonzentration in einem Bereich von 0,1 g/m³ bis 15 g/m³ und die Dosis der applizierten UV-Strahlung in einem Bereich von 50 J/m² bis 200 J/m², wobei die Wellenlänge der UV-Strahlung in einem Bereich von 200 nm bis 300 nm liegt. Um beide Reaktionen unabhängig von einander ablaufen zu lassen und so die Effizienz der für Ozon- und UV-Produktion eingesetzten Energie zu verbessern, ist zwischen den beiden Schritten vorgesehen, das zu behandelnde Wasser zu entgasen.

Mit diesem Verfahren lässt sich eine Behandlung auch von stärker belasteten Abwässern durchführen, bei der die schwer abbaubaren Stoffe in großem Umfang abgebaut werden und eine Reduktion der Anzahl pathogener Keime im Wasser erfolgt.

Gegenüber den bislang nicht in Kombination angewandten Verfahren ergibt sich gegenüber der alleinigen UV-Bestrahlung der Vorteil, dass auch die schwer abbaubaren Stoffe, die Geruchsstoffe und die Farbstoffe reduziert werden. Dies ist mit der reinen UV-Bestrahlung nicht möglich.

Gegenüber der alleinigen Zugabe von Ozon zum Abbau der genannten persistenten Stoffe und zur Desinfektion ergibt sich, dass eine Reduktion der persistenten Stoffe, Geruchsstoffe und Farbstoffe bereits mit Ozonkonzentrationen zu erreichen ist, die für eine Desinfektion von hoch keimbelasteten Wässern oder Abwässern nicht ausreichend wäre. Die nachgeschaltete UV-Bestrahlung kompensiert die geringere Desinfektionswirkung der reduzierten Ozonkonzentration.

Bevorzugt erfolgt die Zugabe von Ozon mit einer Konzentration von 5 bis 10 g/m³. Die zur UV-Bestrahlung verwendete Wellenlänge beträgt vorzugsweise 254 nm und wird mit Quecksilberniederdruckgasentladungsstrahlern erzeugt.

Die UV-Bestrahlungsdosis beträgt vorzugsweise 100 bis 1000 J/m², insbesondere 250 bis 400 J/m².

Das soweit beschriebene Verfahren wird vorteilhaft insbesondere zur Reduktion von endokrinen Stoffen in Trinkwasser oder Abwasser angewendet.

Erfindungsgemäß ist zwischen der Ozonzugabe und der UV-Bestrahlung eine Filterstufe als Sand/kiesfiltration vorgesehen.

Das Verfahren ist insbesondere vorteilhaft bei Wässern, die im relevanten UV-Wellenlängenbereich um 254 nm vor dem Verfahrensschritt der Ozonzugabe eine reduzierte UV-Transmission von weniger als 50% aufweisen. Dabei ist die Transmission bei 254 nm in destilliertem Wasser als 100% definiert.

Weiter betrifft die vorliegende Erfindung eine Vorrichtung zur Durchführung des Verfahrens gemäß Anspruch 7.

Mit dieser Vorrichtung kann das erfindungsgemäße Verfahren vorteilhaft durchgeführt werden. Weil die Ozonerzeugungsvorrichtung, genauer gesagt die Zudosierung von Ozon zu dem Abwasserstrom, stromaufwärts der UV-Desinfektionsvorrichtung erfolgt, kann das Ozon durch oxidativen Abbau der Farb- oder Trübungsstoffe zunächst die UV-Transmission des zu behandelnden Abwassers verbessern und die UV-Desinfektionsvorrichtung kann somit aufgrund der verbesserten Transparenz des Abwassers wirksamer arbeiten. Die Entgasungsvorrichtung kann dabei sowohl passiv beispielsweise als Becken oder Tank ohne Ozoneinspeisung ausgeführt sein, wobei das überschüssige Gas innerhalb der Verweildauer absorbiert oder ausgetrieben wird. Es kann auch eine aktive Entgasung mittels Rührer, Unterdruck oder dergleichen vorgesehen sein.

Gegenüber Vorrichtungen, die die Ozon-Zudosierung und die UV-Desinfektion nicht in dieser Kombination aufweisen, kann die Vorrichtung mit geringeren Installationskosten und geringeren Betriebskosten betrieben werden.

Der vorteilhafte Effekt der Kombination von Ozoneinspeisung und UV-Desinfektion wird dadurch weiter verstärkt, daß zwischen diesen beiden Stufen eine Filtration als Sandfiltration oder Sand-/Kiesfiltration vorgesehen ist. Durch den oxidativen Abbau der schwer abbaubaren Stoffe werden diese nämlich zum Teil in Abbauprodukte umgewandelt, die von einer Filtration effektiv zurückgehalten werden können. Diese Maßnahme verbessert sowohl die Qualität des Wassers hinsichtlich der Konzentration von Abbauprodukten als auch die für die nachfolgende UV-Desinfektion vorteilhafte Transparenz des Wassers im UV-Bereich, wobei gleichzeitig durch die Ozonvorbehandlung die UV-Anlage aufgrund der besseren Transmission effizienter betrieben werden kann.

Erfindungsgemäß ist auch die Verwendung einer in soweit beschriebenen Vorrichtung zur Reduktion des Gehalts an endokrinen Stoffen in Trinkwasser oder Abwasser vorgesehen. Die endokrinen Stoffe sind dabei ausgewählt aus der Gruppe, die folgendes umfaßt:
- Chlorphenole
- Phthalate
- Pestizide
- Phenole
- chlorierte Aromaten
- Organozinnverbindungen
- Dioxine
- Furane
- natürliche oder naturidentische Hormone
- Medikamente
- Kosmetika.

Nachfolgend wird ein Ausführungsbeispiel der vorliegenden Erfindung anhand der Zeichnung beschrieben.

Es zeigen:
- Fig. 1:: eine Vorrichtung zur Durchführung des erfindungsgemäßen Verfahrens im Abwasserbereich in einer schematischen Darstellung; sowie
- Fig. 2:: eine Vorrichtung gemäß Fig. 1 mit zweistufiger Ozonbehandlung in einem Blockschaltbild.

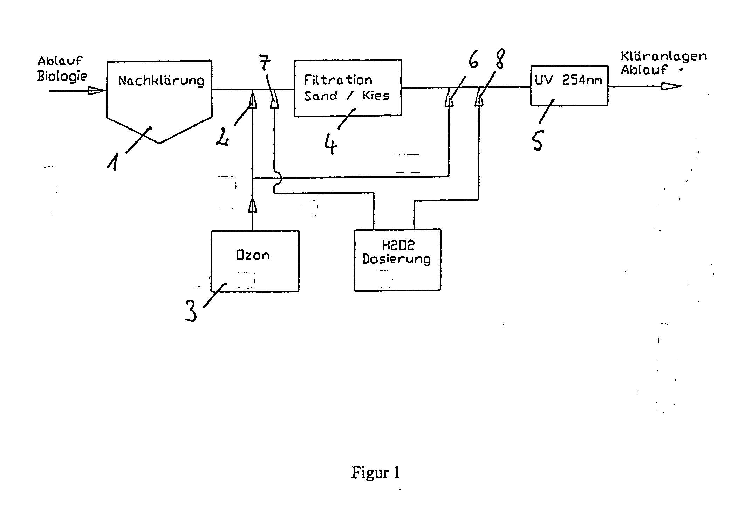

Die Fig. 1 zeigt in einem Blockschaltbild den Aufbau einer erfindungsgemäßen Wasserbehandlungsvorrichtung bzw. einer Vorrichtung zur Durchführung des erfindungsgemäßen Verfahrens, wie sie einer konventionellen Kläranlage nachgeschaltet ist. Die Anlage bezieht Wasser aus einem Ablauf der biologischen Klärung einer Belebtschlammstufe einer Kläranlage. Dieser Ablauf wird einer Nachklärung 1 unterzogen. Dem nachgeklärten Abwasser, das eine unzulässig hohe Konzentration sowohl an persistenten Stoffen als auch an pathogenen Keimen enthält, verlässt die Nachklärung und darf in diesem Zustand nicht in Badegewässer eingeleitet werden oder zur Bewässerung von landwirtschaftlichen Flächen genutzt werden. Deshalb ist stromabwärts der Nachklärung 1 eine Einspeisung 2 aus einem Ozonerzeuger 3 vorgesehen. Die Einspeisung erfolgt hier mit einer Konzentration von etwa 5 g Ozon pro m³ Wasser. Diese Konzentration ist geeignet, die die persistenten Stoffe, Geruchsstoffe und Farbstoffe zu reduzieren und die Transmission des Abwassers im UV-Bereich zu verbessern. Sie ist jedoch nicht geeignet, die Anzahl der pathogenen Keime auf das angestrebte Niveau zu reduzieren.

Der Ozoneinspeisung 2 ist im Strom des Abwassers eine Sand/Kiesfiltration 4 nachgeschaltet, in der erneut Partikel aus dem Abwasserstrom entfernt werden, und zwar hier auch Abbauprodukte von persistenten Stoffen, die durch die Ozoneinspeisung einem oxidativen Abbau unterliegen. Hinter der Sand/Kiesfiltration ist dann eine UV-Desinfektionsvorrichtung 5 vorgesehen, die mit einer Anzahl von Niederdruck-UV-Strahlern in dem Wellenlängenbereich 254 nm eine Dosis von etwa 250 bis 400 J/m² abgibt.

Nach der UV-Desinfektionsstufe kann das Abwasser unbedenklich in einen Kläranlagenablauf und damit in die Umwelt abgegeben werden. Die zuvor in dem Abwasser enthaltenen persistenten Stoffe und die Mikroorganismen sind durch die Ozoneinspeisung und die UV-Bestrahlung in wirksamer Weise reduziert worden.

Zusätzlich ist bei diesem Ausführungsbeispiel ein zweiter Einspeisepunkt 6 für Ozon nach der Sand/Kiesfiltration 4 vorgesehen, das eine eventuelle Nachbehandlung von Stoffen oder Mirkoorganismen erlaubt, die die Filtration 4 durchbrechen können.

Als weitere Option ist bei diesem Ausführungsbeispiel vorgesehen, eine H₂O₂-Zudosierung an Einspeisepunkten 7 vor der Filtration 4 und 8 nach der Filtration 4 zu ermöglichen. Die H₂O₂₋Einspeisung kann erfolgen, um die Wirkung des Ozons zu verbessern, wenn sehr schwer abbaubare Stoffe vorliegen. Dies gilt beispielsweise für gesättigte Kohlenwasserstoffverbindungen.

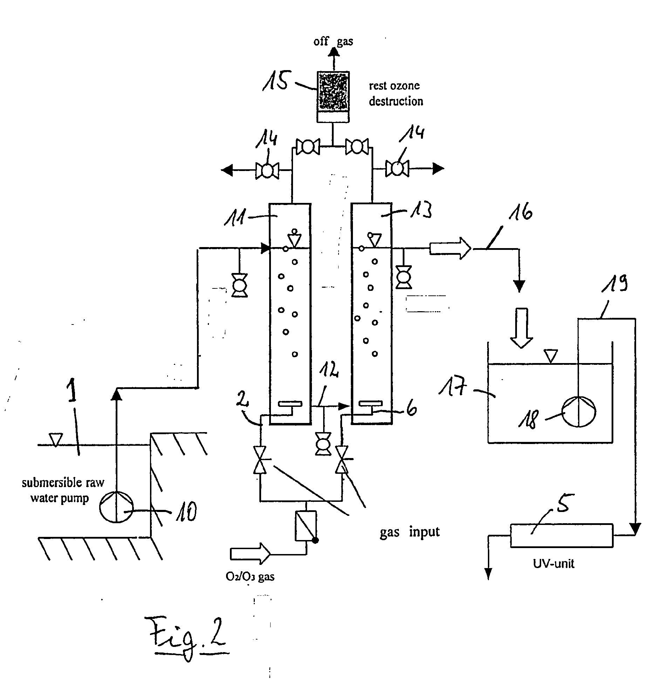

Die Figure 2 illustriert die Wirkung der Entgasung nach der Ozonzugabe auf den UV-Bestrahlungschritt.

Im Einzelnen zeigt die Figur 2 die Nachklärung 1, in der eine Pumpe 10 für das zu behandelnde Wasser angeordnet ist. Die Pumpe 10 fördert das Wasser in eine erste Behandlungskammer 11, in die von unten über die Einspeisung 2 Ozon eingeleitet wird. Das Ozon steigt in Form von Gasblasen auf, während das zu behandelnde Wasser nach unten in eine Verbindungsleitung 12 im Gegenstrom abgegeben wird. Aus der Verbindungsleitung 12 gelangt das vorbehandelte Wasser in eine zweite Behandlungskammer 13, wo wiederum Ozon über die Einspeisung 6 zugegeben wird. Das an der Oberseite der Kammern 11 und 13 austretende ozonhaltige Gas wird je nach Restkonzentration entweder unmittelbar durch die Ventile 14 oder über eine Vorrichtung zum Abbau von Restozon 15 abgegeben. Das nun zweistufig mit Ozon behandelte Abwasser gelangt über eine Leitung 16 in eine Entgasungsvorrichtung 17, die in diesem Ausführungsbeispiel als Lagertank ausgebildet ist. Hier werden verbleibende Gasblässchen abgeschieden. Das entgaste Wasser wird dann über eine Pumpe 18 und die Rohrleitung 19 in die UV-Bestrahlungseinheit 5 geleitet. Hier kann die UV-Strahlung mit einer Wellenlänge von etwa 254 nm optimal wirken, da nach der zweistufigen Ozonbehandlung in den Kammern 11 und 13 die eventuell vorhandene Trübung des Abwassers wesentlich abgebaut ist und weil außerdem keine Restgasbläschen in dem Wasser vorhanden sind, die die UV-Transmission behindern würden. Andererseits ist die räumlich von den Behandlungskammern 11 und 13 getrennte UV-Bestrahlungseinheit 5 nicht in der Lage, dass in die Behandlungskammern 11 und 13 eingespeiste Ozon zu zerstören, sodass das Ozon in diesen Kammern voll zur Wirkung kommen kann. Dies ist insbesondere bei den angestrebten Konzentrationswerten von 1-20g/m³ Wasser wichtig. Das Ozon wird optimiert eingesetzt, ohne gleichzeitige Aktivierungsreaktionen, die vor allem im Abwasser nicht gezielt eingesetzt werden können. Im Regelfall reagiert das eingetragene Ozon in der gewünschten Weise ab (Zerstörung der organischen Komponenten) und das so vorbehandelte Abwasser wird in der UV-Anlage im wesentlichen gasblasenfrei und ohne Restozon abschließend behandelt. Reagiert das eingetragene Ozon nicht komplett ab, kann das restliche gelöste Ozon (ohne Gasblasen) in der UV-Anlage weiter aktiviert werden.

Im Hinblick auf die effiziente Nutzung der für die Ozonproduktion und die UV-Strahlung eingesetzten Energie ist das Verfahren und die Vorrichtung nach der vorliegenden Erfindung optimiert, da das Ozon ohne die nachteiligen Effekte der UV-Strahlung für das Ozon seine Wirkung tun kann. Man kommt deshalb mit relativ geringen Ozonkonzentrationen aus. Andererseits kann die UV-Strahlung in Abwesenheit von Trübung und Gasbläschen besonders gut genutzt werden, da die Transmission am Ort der UV-Behandlung erheblich verbessert ist.

Es ergibt sich insgesamt ein Verfahren und eine Vorrichtung zur Behandlung von belastetem Wasser, die hinsichtlich der Nutzung der eingesetzten Energie optimiert sind und die deshalb für großtechnische Aufbereitungsanlagen bspw. im Bereich des kommunalen Abwassers, besonders geeignet sind.

Der vorteilhafte Effekt der Kombination von Ozoneinspeisung und UV-Bestrahlung mit den angegebenen Konzentrationen bzw. Intensitäten beruht auf der Tatsache, dass sich die kombinierten Verfahren in ihrer Wirkung ergänzen. Das Ozon bewirkt in einer deutlich geringeren Konzentration als den allgemein angewendeten 20 g / m³ einen weitgehenden Abbau der persistenten Stoffe, der Geruchsstoffe und der Farbstoffe. Zusätzlich bewirkt das Ozon bereits in der angegebenen geringen Konzentration eine Verbesserung der UV-Transparenz. Die UV-Bestrahlung ist allein nicht geeignet, persistente Stoffe abzubauen. Ein bereits mit Ozon behandeltes Wasser, das aufgrund der niedrigen eingebrachten Ozonkonzentration noch Mikroorganismen enthalten kann, wird aber zuverlässig desinfiziert. Hierbei kann die UV-Strahlungsleistung gegenüber nicht mit Ozon behandeltem Wasser häufig verringert werden, da die Transmission verbessert wird. Es ergibt sich also ein synergistischer Effekt, der es erlaubt, die Anlage insgesamt kleiner zu dimensionieren, als es bei einer reinen Ozon- oder UV-Behandlung möglich wäre. Dieser Effekt macht neben den technischen Vorteilen diese Anlage auch wirtschaftlich interessant.

## Patentansprüche

1. Verfahren zur Behandlung von Wasser bei gleichzeitiger Anwesenheit von
- pathogenen Keimen einerseits und
- andererseits wenigstens einem schwer abbaubaren Stoff aus der Gruppe, die folgendes umfasst: persistente Stoffe, endokrine Stoffe, Geruchsstoffe, Farbstoffe,
insbesondere von Abwasser oder Trinkwasser, mit Ozonzuführung und UV-Bestrahlung, mit folgenden Verfahrensschritten:
a) Zugabe von Ozon in einer Konzentration von 0,1 g/m³ bis 15g/m³;
b) Entgasung des Wassers;
c) Bestrahlung des entgasten Wassers mit UV-Strahlung in einem Wellenlänge im Bereich von 200nm bis 300nm und einer Dosis von 50 J/m² bis 2.000 J/m²,
**dadurch gekennzeichnet, dass**
zwischen der Einspeisung und der UV-Desinfektionsvorrichtung eine Sandfiltration oder eine Sand/Kiesfiltration vorgesehen ist.

2. Verfahren nach Anspruch 1, **dadurch gekennzeichnet, dass** die Zugabe von Ozon mit einer Konzentration von 2,5 g/m³ bis 10 g/m³, insbesondere etwa 5 g/m³ erfolgt.

3. Verfahren nach einem der vorhergehenden Ansprüche, d**adurch gekennzeichnet**, dass die UV-Bestrahlung mit Strahlung aus Niederdruck-Strahlenquellen mit einer Wellenlänge von 254nm erfolgt.

4. Verfahren nach einem der vorhergehenden Ansprüche, **dadurch gekennzeichnet, dass** die UV-Bestrahlung mit einer Dosis von 100 J/m² bis 1.000 J/m² erfolgt.

5. Verfahren nach einem der vorhergehenden Ansprüche, **dadurch gekennzeichnet, dass** die UV-Bestrahlung mit einer Dosis von 250 J/m² bis 400 J/m² erfolgt.

6. Verfahren nach einem der vorhergehenden Ansprüche, **dadurch gekennzeichnet, dass** das Wasser vor dem Verfahrensschritt a) bei 254 nm eine reduzierte UV-Transmission von weniger als 50% bezogen auf die Transmission von reinem Wasser aufweist.

7. Vorrichtung zur Durchführung des Verfahrens nach einem der vorhergehenden Ansprüche, mit folgenden Merkmalen:
- einem Zulauf für vorgeklärtes Abwasser;
- einer Ozonerzeugungsvorrichtung mit einer Zugabevorrichtung, die das Ozon stromabwärts des Zulaufs in das Wasser einspeist;
- einer stromabwärts der Einspeisung angeordneten UV-Desinfektionsvorrichtung;
- einem Ablauf,
**dadurch gekennzeichnet, dass**
- in Strömungsrichtung zwischen der Einspeisung und der UV-Desinfektionsvorrichtung eine Sandfiltration oder eine Sand/Kiesfiltration vorgesehen ist.

8. Vorrichtung nach Anspruch 7, **dadurch gekennzeichnet, dass** in Strömungsrichtung zwischen der Einspeisung und der UV-Desinfektionsvorrichtung eine Entgasungsvorrichtung vorgesehen ist.

## Claims

1. Method for the treatment of water with the simultaneous presence of:
- pathogenic bacteria on the one hand, and
- on the other hand, at least one poorly degradable substance from the group which comprises the following: persistent substances, endocrinal substances, odorous substances, colouring agents,
in particular from waste water or drinking water, with the addition of ozone and UV irradiation, with the following method steps:
a) Addition of ozone in a concentration of 0.1 g/m³ to 15 g/m³;
b) Degasification of the water;
c) Irradiation of the degasified water with UV irradiation at a wavelength in the range from 200 nm to 300 nm and a dose of 50 J/m² to 2,000 J/m²,
**characterised in that** provision is made for a sand filtration or sand/gravel filtration between the infeed and the UV disinfection device.

2. Method according to Claim 1, **characterised in that** the addition of ozone is effected at a concentration of 2.5 g/m³ to 10 g/m³, in particular some 5 g/m³.

3. Method according to one of the preceding claims, **characterised in that** the UV irradiation is effected with radiation from low-pressure radiation sources with a wavelength of 245 nm.

4. Method according to one of the preceding claims, **characterised in that** the UV irradiation is effected at a dose of 100 J/m² to 1,000 J/m².

5. Method according to one of the preceding claims, **characterised in that** the UV irradiation is effected at a dose of 250 J/m² to 400 J/m².

6. Method according to one of the preceding claims, **characterised in that**, before the method step a), at 254 nm the water has a reduced UV transmission of less than 50% related to the transmission from pure water.

7. Device for carrying out the method according to one of the preceding claims, with the following features:
- an inlet for pre-treated waste water;
- an ozone production device with an administering device, which feeds the ozone into the water downstream of the inlet;
- a UV disinfection device arranged downstream of the infeed;
- an outlet,
**characterised in that** provision is made for a sand filtration or a sand/gravel filtration in the direction of the flow between the infeed and the UV disinfection device.

8. Device according to Claim 7, **characterised in that** a degasification device is provided in the direction of the flow between the infeed and the UV disinfection device.

## Revendications

1. Procédé de traitement d'eau en la présence simultanée
- d'une part de germes pathogènes et
- d'autre part d'au moins une substance dont la dégradation est difficile choisie dans le groupe constitué par : des substances rémanentes, des substances endocrines, des substances odorantes, des substances colorantes,
en particulier d'eau usée ou d'eau potable, avec un ajout d'ozone et une irradiation aux UV, avec les étapes de procédé suivantes :
a) ajout d'Ozone à une concentration de 0,1 g/m³ à 15 g/m³ ;
b) dégazage de l'eau ;
c) irradiation de l'eau dégazée avec des rayons UV d'une longueur d'onde de 200 nm jusqu'à 300 nm et à une dose de 50 J/m² jusqu'à 2000 J/m²,
**caractérisé en ce qu'**il est prévu une filtration sur sable ou une filtration sur sable/gravier entre l'alimentation et l'appareil de désinfection UV.

2. Procédé selon la revendication 1, **caractérisé en ce que** l'ajout d'ozone est réalisé à une concentration de 2,5 g/m³ jusqu'à 10 g/m³, en particulier environ 5 g/m³.

3. Procédé selon l'une quelconque des revendications précédentes, **caractérisé en ce que** l'irradiation UV est réalisée avec une radiation à partir de sources de radiation basse pression présentant une longueur d'onde de 254 nm.

4. Procédé selon l'une quelconque des revendications précédentes, **caractérisé en ce que** l'irradiation UV est réalisée à une dose de 100 J/m² jusqu'à 1000 J/m².

5. Procédé selon l'une quelconque des revendications précédentes, **caractérisé en ce que** l'irradiation UV est réalisée à une dose de 250 J/m² jusqu'à 400 J/m².

6. Procédé selon l'une quelconque des revendications précédentes, **caractérisé en ce que** l'eau avant l'étape a) du procédé, présente, à 254 nm, une transmission UV de moins de 50% comparée à la transmission de l'eau pure.

7. Dispositif pour la mise en oeuvre du procédé selon l'une quelconque des revendications précédentes, présentant les caractéristiques suivantes :
- une entrée pour l'eau usée pré-clarifiée,
- un dispositif de production d'ozone avec un système d'alimentation qui alimente l'eau en ozone en aval de l'entrée,
- un dispositif de désinfection UV disposé en aval de l'alimentation,
- une sortie,
**caractérisé en ce qu'**il est prévu dans le sens du flux, entre l'alimentation et le dispositif de désinfection UV, une filtration sur sable ou une filtration sur sable/gravier.

8. Dispositif selon la revendication 7, **caractérisé en ce qu'**il est prévu, dans le sens du flux, un dispositif de dégazification entre l'alimentation et le dispositif de désinfection UV.
